# EUROPÄISCHE PATENTSCHRIFT

(11) **EP 2 134 896 B1**
(45) Veröffentlichungstag und Bekanntmachung des Hinweises auf die Patenterteilung: **12.01.2011**
(21) Anmeldenummer: 08717411.6
(22) Anmeldetag: 05.03.2008
(51) Int. Cl.: D06F 58/22

(54) **VERFAHREN UND VORRICHTUNG ZUM REINIGEN EINES BAUTEILES, INSBESONDERE EINES VERDAMPFERS EINER KONDENSATOREINRICHTUNG SOWIE WASCH- ODER WÄSCHE-TROCKNER MIT EINER SOLCHEN VORRICHTUNG**
METHOD AND DEVICE FOR CLEANING A COMPONENT, PARTICULARLY OF A VAPORIZER OF A CONDENSER DEVICE AND A WASHER OR WASHER/DRYER COMPRISING SUCH A DEVICE
PROCÉDÉ ET DISPOSITIF DE NETTOYAGE D'UN COMPOSANT, EN PARTICULIER D'UN ÉVAPORATEUR D'UN SYSTÈME CONDENSEUR, ET SYSTÈME LAVEUR OU SÈCHE-LINGE PRÉSENTANT UN TEL DISPOSITIF

(30) Priorität: 03.04.2007 DE 102007016074
(43) Veröffentlichungstag der Anmeldung: 23.12.2009
(73) Patentinhaber: BSH Bosch und Siemens Hausgeräte GmbH, 81739 München (DE)
(72) Erfinder: GRUNERT, Klaus, 13465 Berlin (DE)
(86) Internationale Anmeldenummer: PCT/EP2008/052661
(87) Internationale Veröffentlichungsnummer: WO 2008/119611

(56) Entgegenhaltungen:
- DE-A1- 3 738 031
- FR-A- 2 711 153
- US-A- 5 272 781

## Beschreibung

Die Erfindung bezieht sich auf ein Verfahren und eine Vorrichtung zum Reinigen eines innerhalb eines Prozessluftkreislaufes eines Wasch- oder Wäschetrockners angeordneten Bauteiles, insbesondere eines Verdampfers einer Kondensatoreinrichtung, mittels Kondensatwasser, welches in dem Prozessluftkreislauf aus dem Trocknen von feuchter Wäsche gewonnen und in einer Kondensatwasserwanne aufgefangen wird, aus der es zu einem oberhalb des Verdampfers vorgesehenen Spülbehälter geleitet und von dessen Austrittsseite an den betreffenden Verdampfer abgegeben wird (siche FR-A-2711153). Die Erfindung bezieht sich ferner auf einen Wasch- oder Wäschetrockner mit einer Vorrichtung der vorstehend genannten Art. Es sei hier angemerkt, dass unter einem Waschtrockner ein Kombinationsgerät verstanden wird, welches über eine Waschfunktion zum Waschen von Wäsche und über eine Trocknungsfunktion zum Trocknen von feuchter Wäsche verfügt. Ein Wäschetrockner verfügt demgegenüber lediglich über eine Trocknungsfunktion zum Trocknen von feuchter Wäsche.

Es sind bereits ein Verfahren und eine Vorrichtung der vorstehend genannten Art zum Entfernen von Flusen aus einem als Wärmetauscher ausgebildeten Kondenswasser-Abscheider bekannt (DE 37 38 031 C2). Bei dem betreffenden bekannten Verfahren und bei der zu dessen Durchführung vorgesehenen Vorrichtung wird eine relativ geringe Menge von etwa einem halben Liter Kondenswasser zum einmaligen Abspülen der Platten der vorgesehenen Kondensatoreinrichtung verwendet. Der betreffende Spülvorgang dauert dabei etwa 30 Sekunden lang. Um aus der Kondensatoreinrichtung Flusen wirksam zu entfernen, die in der betreffenden Kondensatoreinrichtung beim Trocknen von feuchter Wäsche hängen geblieben sind, ist jedoch eine relativ starke Spülung der Kondensatoreinrichtung erforderlich. Dies bedingt allerdings den Einsatz einer relativ starken Pumpe, die das Kondensatwasser aus der Kondensatwasserwanne zu der vorhandenen Spülvorrichtung hin pumpt. Es besteht zuweilen aber der Wunsch, einen derart hohen Aufwand zu vermeiden und mit einer einfacheren Anordnung auszukommen, um ein innerhalb eines Prozessluftkreislaufes eines Wasch- oder Wäschetrockners angeordnetes Bauteil, insbesondere einen Verdampfer einer Kondensatoreinrichtung mittels des in einer Kondensatwasserwanne aufgefangenen Kondensatwassers zu reinigen.

Es ist ferner eine Vorrichtung zum Reinigen des Verdampfers einer Kondensatoreinrichtung in einem Wäschetrockner bekannt (EP 0 468 573 A1). Bei dieser bekannten Vorrichtung kann der aus einer Vielzahl von parallel zueinander angeordneten Lamellen bestehende Verdampfer der Kondensatoreinrichtung auf seiner einer Kondensatwasserwanne gegenüberliegenden Seite mittels einer Reinigungsvorrichtung gereinigt werden. Diese Reinigungsvorrichtung besteht aus einer hin und her bewegbaren kammartigen Bürsten- bzw. Borstenanordnung, der zusätzlich in der Kondensatwasserwanne enthaltenes Kondensatwasser zugeführt wird. Bei dieser bekannten Vorrichtung ist jedoch die Reinigung des Verdampfers der Kondensatoreinrichtung relativ schlecht, da die kammförmige Reinigungsvorrichtung lediglich den oberen Bereich des Verdampfers der Kondensatoreinrichtung zu reinigen vermag, nicht aber den darunter liegenden, wesentlich größeren Bereich. Dieser ließe sich möglicherweise dadurch reinigen, dass die kammartige Reinigungsvorrichtung mit über die gesamte Tiefe des Verdampfers sich erstreckenden Borsten versehen würde. Dies würde jedoch, sofern es überhaupt funktionieren würde, wegen der damit verbundenen erheblichen Reibung zwischen den Borsten der kammartigen Reinigungsvorrichtung und den Seitenwänden der Lammellen des Verdampfers einen relativ hohen Energieaufwand und damit einen relativ hohen apparativen Aufwand erfordern. Ein solcher Aufwand wird jedoch als unerwünscht angesehen.

Es sind außerdem ein Verfahren und ein Haushaltwäschetrockner zum Reinigen eines Abschnitts einer Führung eines Prozessluftstroms bekannt (DE 199 43 125 A1). Dabei ist ein Gebläse zum Erzeugen des Prozessluftstroms vorgesehen, der in einem Trockenraum mit der zu trocknenden Wäsche für die Aufnahme von Feuchtigkeit in Berührung gebracht werden kann. Außerhalb einer Trocknungsphase, in der mittels des Gebläses der Prozessluftstrom erzeugt und in dem Trockenraum mit der zu trocknenden Wäsche in Berührung gebracht wird, wird in einer Reinigungsphase bei ausgeschaltetem Gebläse ein Abschnitt der Prozessluftführung zumindest teilweise für eine bestimmte Zeitdauer mit einer Flüssigkeit geflutet. Diese Flüssigkeit wird dann am Ende der Reinigungsphase aus dem gefluteten Abschnitt der Prozessluftführung wieder entfernt. Bei der betreffenden Flüssigkeit handelt es sich insbesondere um Kondensatflüssigkeit aus einem Kondensatbehälter, in welchem während des Trocknens der Wäsche Kondensatwasser gesammelt wird, das aus dem Trocknen von feuchter Wäsche gewonnen wird. Um das erwähnte Fluten des genannten einen Abschnitts der Prozessluftführung vornehmen zu können, ist dieser mittels einer Abdichtungsanordnung abzudichten, die wegen des damit verbundenen Aufwands jedoch zuweilen als unerwünscht angesehen wird. Es wird also nach einer einfacheren Lösung zum Reinigen eines innerhalb eines Prozessluftkreislaufes eines Wasch-oder Wäschetrockners angeordneten Bauteiles gesucht.

Es sind auch schon ein Verfahren zum Entfernen von Flusen aus einem Wärmetauscher eines Hausgerätes sowie ein entsprechendes Hausgerät vorgeschlagen worden (amtliches Aktenzeichen 10 2006 061 211.6 - internes Aktenzeichen: 200602617), wozu eine insbesondere durch ein während eines Trocknungsprozesses in dem Hausgerät erzeugtes Kondensat gebildete Spülflüssigkeit während einer Reinigungsphase abhängig von der Stärke eines Luftstromes abgelenkt wird und abhängig von der Ablenkung durch verschiedene Bereiche des Wäschetauschers strömt. Dabei kann eine effiziente Reinigung des Wärmetauschers jedoch nur mit einem hinreichend großen Volumen an und/oder mit hinreichend schnell fließender Spülflüssigkeit erreicht werden. Wie dies zu erreichen ist, ist allerdings in dem betreffenden Zusammenhang offen gelassen.

Der Erfindung liegt daher die Aufgabe zugrunde, einen Weg zu zeigen, wie auf besonders einfache Weise ein innerhalb eines Prozessluftkreislaufes eines Wasch- oder Wäschetrockners angeordnetes Bauteil, und zwar insbesondere ein Verdampfer einer Kondensatoreinrichtung, mittels Kondensatwasser besonders effektiv gereinigt werden kann, ohne dass dazu ein nennenswerter Aufwand erforderlich ist.

Gelöst wird die vorstehend aufgezeigte Aufgabe bei einem Verfahren der eingangs genannten Art erfindungsgemäß dadurch, dass das Kondensatwasser aus dem Spülbehälter durch dessen schlagartiges Öffnen auf der Austrittsseite als Wasserschwall an das betreffende Bauteil abgegeben wird.

Die Erfindung bringt den Vorteil mit sich, dass durch einen einfachen Verfahrensschritt, nämlich durch Abgabe des Kondensatwassers aus dem Spülbehälter als Wasserschwall ausgekommen werden kann, um ein innerhalb eines Prozessluftkreislaufes eines Wasch-oder Wäschetrockners angeordnetes Bauteil, und zwar insbesondere einen Verdampfer einer Kondensatoreinrichtung effektiv reinigen zu können, und zwar insbesondere von Flusen, die sich dort während eines Trocknungsvorgangs von feuchter Wäsche angesammelt haben. Nimmt man beispielsweise eine Kondensatwassermenge von 2,5 Liter an, die in dem Spülbehälter gesammelt ist, so wird die erwähnte effiziente Reinigung des Bauteiles bzw. Verdampfers der Kondensatoreinrichtung dadurch erzielt, dass diese Kondensatwassermenge innerhalb einer Zeitspanne von etwa 1s bis 2s schwallartig abgegeben wird. Im Falle der Abgabe von 2,5 Liter Kondensatwasser innerhalb von 1s entspricht dies einer Abgabemenge von 150 Litern/min Kondensatwasser. Im Falle der als Beispiel angenommenen Kondensatwasserabgabe innerhalb von 2s entspricht dies einer Kondensatwasserabgabe von 75 Litern/min. Derartige Wassermengen könnten - wollte man zu ihrer Abgabe eine Pumpe einsetzen - übrigens lediglich mit einer relativ großvolumigen und leistungsstarken Förderpumpe abgegeben werden, deren Einsatz jedoch in Wasch-oder Wäschetrocknern für die Förderung von Kondensatwasser zum Reinigen von dort innerhalb von Prozessluftkreisläufen angeordneten Bauteilen, und zwar insbesondere von Verdampfern von Kondensatoreinrichtungen nicht in Frage kommen dürfte.

Vorzugsweise wird der an das Bauteil abzugebende Wasserschwall in seiner Abgabemenge zwischen dem Beginn und der Beendigung der Abgabe weitgehend vergleichmäßigt. Dadurch ergibt sich der Vorteil einer zwischen dem Beginn und der Beendigung der Wasserschwallabgabe relativ gleichmäßigen Spülwirkung an bzw. in dem zu reinigenden Bauteil.

Gemäß einer weiteren zweckmäßigen Ausgestaltung der vorliegenden Erfindung wird bei einem das genannte Bauteil bildenden Verdampfer einer Kondensatoreinrichtung der Wasserschwall an einen vorzugsweise lediglich in einem festgelegten Abstand von dem Eintrittsbereich der Prozessluft in den Verdampfer befindlichen Verdampferbereich abgegeben. Dies bringt den Vorteil mit sich, dass im gesamten Eintrittsbereich des Verdampfers üblicherweise verstärkt auftretende Ablagerungen in Form von Flusen wirksam entfernt werden können. Dabei wird die Wasserschwallabgabe vorzugsweise unmittelbar nach Beendigung eines Trocknungsvorgangs von zu trocknender feuchter Wäsche ausgeführt, da zu diesem Zeitpunkt an dem erwähnten Bauteil bzw. Verdampfer der Kondensatoreinrichtung haftende Verunreinigungen, insbesondere Flusen, noch feucht sind und durch die schwallartig abgegebene Spülflüssigkeit relativ leicht entfernbar sind.

Gemäß einer anderen zweckmäßigen Weiterbildung der vorliegenden Erfindung wird bei einem das genannte Bauteil bildenden Verdampfer einer Kondensatoreinrichtung die Abgabe des Wasserschwalls unter dessen mechanischer oder elektromechanischer Ablenkung von einem am Eintrittsbereich der Prozessluft in den Verdampfer vorgesehenen Anfangsbereich bis zu einem in Abstand davon in Richtung zu dem Austrittsbereich der Prozessluft aus dem Verdampfer liegenden Endbereich vorgenommen. Hierdurch ergibt sich der Vorteil, dass eine Reinigung des zu reinigenden Bauteiles, und zwar insbesondere des Verdampfers einer Kondensatoreinrichtung auf relativ einfache Weise über einen festlegbaren Bereich vorgenommen werden kann. Der betreffende Bereich kann sich dabei vom Eintrittsbereich der Prozessluft in den Verdampfer bis zu deren Austrittsbereich aus dem Verdampfer erstrecken. Die Wasserschwallabgabe wird auch in diesem Fall vorzugsweise unmittelbar nach Beendigung eines Trocknungsvorgangs von zu trocknender feuchter Wäsche ausgeführt, da zu diesem Zeitpunkt an dem erwähnten Bauteil bzw. Verdampfer der Kondensatoreinrichtung haftende Verunreinigungen, insbesondere Flusen, noch feucht sind und durch die schwallartig abgegebene Spülflüssigkeit gut entfernbar sind.

Zweckmäßigerweise wird das Kondensatwasser mittels einer Pumpe aus der Kondensatwasserwanne in den Spülbehälter gepumpt. Dies stellt eine relativ einfache Möglichkeit für die Bereitstellung des Kondensatwassers dar, welches als Schwallwasser zum Reinigen des insbesondere durch einen Verdampfer einer Kondensatoreinrichtung gebildeten Bauteiles abgegeben wird. Dabei wird in vorteilhafter Weise mit einer relativ kleinen und eine geringe Leistung aufweisenden Pumpe ausgekommen, um das Kondensatwasser aus der Kondensatwasserwanne in den Spülbehälter zu pumpen. Die Leistung einer solchen Pumpe liegt deutlich, insbesondere größenordnungsmäßig unter der Leistung einer Pumpe, wie sie eingangs im Zusammenhang mit der prinzipiellen Ausführung der vorliegenden Erfindung erwähnt worden ist.

Zweckmäßigerweise wird das schlagartige Öffnen des Spülbehälters auf dessen Austrittsseite durch Betätigen eines bistabilen Spülbehälterverschlusses gesteuert. Dies bringt den Vorteil eines besonders wirksamen schlagartigen Öffnens des Spülbehälters auf dessen Austrittsseite mit sich. Dabei kann in vorteilhafter Weise der Effekt ausgenutzt werden, dass durch einen relativ kurzen Betätigungshub auf der Steuerungsseite ein relativ großer Hub auf der gesteuerten Seite eines Betätigungsgliedes für die Betätigung des Spülbehälterverschlusses erreicht werden kann. Überdies kann in vorteilhafter Weise für die Betätigung des bistabilen Spülbehälterverschlusses eine dem bistabilen Spülbehälterverschluss gegebene so genannte Sprungfunktion ausgenutzt werden, durch die eine sprunghafte Bewegung des Spülbehälterverschlusses für dessen Öffnen und auch für dessen Schließen ausführbar ist.

Vorzugsweise erfolgt die zuvor erwähnte Betätigung des Spülbehälterverschlusses thermisch oder elektromagnetisch. Dies bringt den Vorteil einer besonders einfachen Betätigung des Spülbehälterverschlusses mit sich.

Zur Durchführung des Verfahrens gemäß der Erfindung dient vorzugsweise eine Vorrichtung mit einem innerhalb eines Prozessluftkreislaufes eines Wasch- oder Wäschetrockners angeordneten zu reinigenden Bauteil, insbesondere einem Verdampfer einer Kondensatoreinrichtung, und mit einer Kondensatwasserwanne, in welche in dem Prozessluftkreislauf durch Trocknen von feuchter Wäsche entstehendes Kondensatwasser auffangbar, aus dieser zu einem oberhalb des Verdampfers vorgesehenen Spülbehälter hin leitbar und aus diesem an das betreffende Bauteil abgebbar ist. Diese Vorrichtung ist gemäß der Erfindung **dadurch gekennzeichnet, dass** der Spülbehälter auf seiner Austrittsseite ein Verschlussteil aufweist, durch dessen schlagartiges Öffnen der Spülbehälter das in ihm enthaltene Kondensatwasser schwallartig durch ein Fallrohr an das genannte Bauteil abzugeben gestattet.

Dies bringt den Vorteil eines besonders geringen Vorrichtungsaufwands für das Reinigen eines innerhalb eines Prozessluftkreislaufes eines Wasch- oder Wäschetrockners angeordneten Bauteiles, und zwar insbesondere eines Verdampfers einer Kondensatoreinrichtung mit sich. Durch schlagartiges Öffnen des Spülbehälters auf dessen Austrittsseite lässt sich nämlich das in dem Spülbehälter gesammelte Kondensatwasser in effizienter Weise schnell als Wasserschwall an das zu reinigende Bauteil abgeben, ohne dass dazu noch zusätzliche Einrichtungen erforderlich sind.

Zweckmäßigerweise weist das genannte Fallrohr einen Bereich auf, der bezogen auf den Querschnitt des Austrittsbereiches des Spülbehälters verengt ist. Dadurch lässt sich auf relativ einfache Weise eine gute Vergleichmäßigung der Schwallwasserabgabe zwischen deren Beginn und deren Beendigung erreichen.

Gemäß einer weiteren zweckmäßigen Ausgestaltung der Erfindung ist bei einem das genannte Bauteil bildenden Verdampfer einer Kondensatoreinrichtung der Wasserschwall an einen vorzugsweise lediglich in einem festgelegten Abstand von dem Eintrittsbereich der Prozessluft in den Verdampfer befindlichen Verdampferbereich mittels einer mit dem Fallrohr verbundenen, ortsfest angeordneten Spüldüse abgebbar. Dies bringt den Vorteil einer besonders wirksamen Reinigung des hauptsächlich zu reinigenden Bereiches des Verdampfers mit sich, in den die Prozessluft eintritt und dort vor allem Verunreinigungen, wie Flusen, ablagert.

Gemäß einer anderen zweckmäßigen Weiterbildung der vorliegenden Erfindung sind die Spüldüse und/oder das Fallrohr während der Abgabe des Wasserschwalls durch eine mechanisch oder elektromechanisch betätigte Ablenkeinrichtung von einem am Eintrittsbereich der Prozessluft in den Verdampfer der Kondensatoreinrichtung befindlichen Anfangsbereich bis zu einem in Abstand davon in Richtung zu dem Austrittsbereich der Prozessluft aus dem Verdampfer liegenden Endbereich ablenkbar. Dies bringt den Vorteil mit sich, dass der Verdampfer der Kondensatoreinrichtung über eine festlegbare Länge, die insbesondere seine gesamte Länge sein kann, über die er von der Prozessluft durchströmt wird, durch den genannten Wasserschwall zu reinigen ist.

Zweckmäßigerweise ist der Spülbehälter mit der Kondensatwasserwanne mittels einer Pumpe verbunden. Dies bringt den Vorteil mit sich, dass der Spülbehälter auf relativ einfache Weise mit Kondensatwasser gefüllt werden kann.

Vorzugsweise ist das Verschlussteil des Spülbehälters mit einer bistabilen Federanordnung verbunden, die zum Öffnen des durch das Verschlussteil verschlossenen Austrittsbereiches des Spülbehälters betätigbar ist. Hierdurch ergibt sich der Vorteil, dass das Verschlussteil des Spülbehälters durch die bistabile Wirkung der Federanordnung besonders sicher geöffnet werden kann. Die betreffende Öffnung kann dabei vorzugsweise dadurch besonders schnell erfolgen, dass der betreffenden bistabilen Federanordnung eine Sprungfunktion zur Umschaltung in ihre jeweilige bistabile Lage gegeben ist.

Für die zuvor erwähnte Betätigung der bistabilen Federanordnung ist vorzugsweise ein mittels dieser gekoppeltes Thermo- oder Magnetrelais vorgesehen. Hierdurch ergibt sich der Vorteil, dass für die Ansteuerung der bistabilen Federanordnung mit einem besonders geringen Aufwand ausgekommen werden kann.

Anhand von Zeichnungen wird die vorliegende Erfindung nachstehend beispielhaft näher erläutert.

In den Zeichnungen zeigen
- Fig. 1: in einer schematischen Darstellung eine Vorrichtung gemäß einer Ausfüh- rungsform der vorliegenden Erfindung,
- Fig. 2: in einer vergrößerten Darstellung und zum Teil im Schnitt einen bei der Vorrichtung gemäß Fig. 1 vorgesehenen, Kondensatwasser enthaltenden Spülbehälter mit einer Betätigungseinrichtung zum schwallartigen Abgeben des in dem Spülbehälter befindlichen Kondensatwassers,
- Fig. 3: in einer schematischen Darstellung eine Draufsicht auf einen Verdampfer einer Kondensatoreinrichtung, wie er bei der in Fig. 1 dargestellten Vorrich- tung vorgesehen ist, und
- Fig. 4: eine Anordnung, durch die das aus dem Spülbehälter bei der Vorrichtung gemäß Fig. 1 schwallartig abgegebene Kondensatwasser über einen fest- legbaren Bereich des Verdampfers der Kondensatoreinrichtung abgebbar ist.

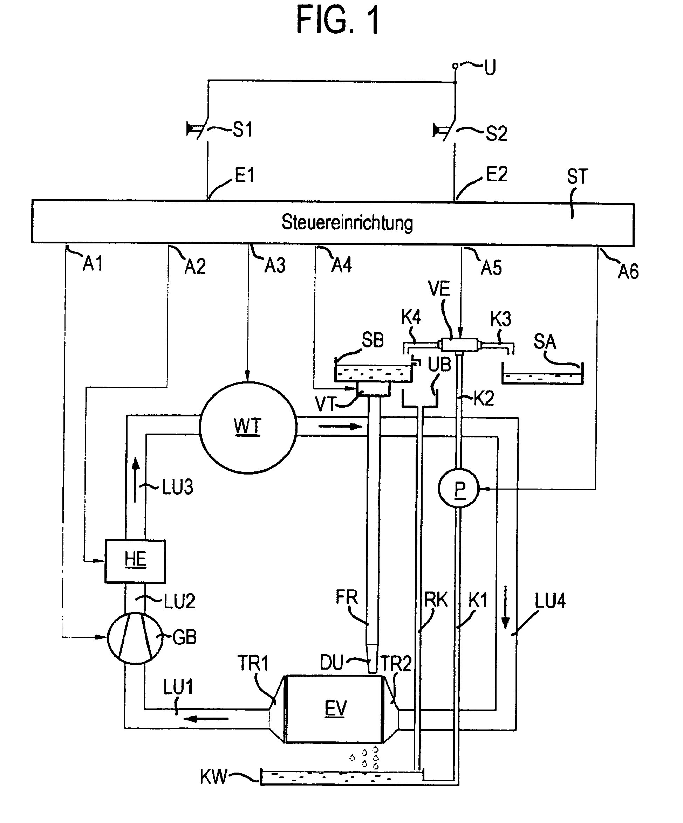

Die in Fig. 1 in einer schematischen Darstellung gezeigte Vorrichtung gemäß einer Ausführungsform der vorliegenden Erfindung ist in einem Wasch- oder Wäschetrockner enthalten, von dem in Fig. 1 allerdings lediglich die für ein Verständnis der vorliegenden Erfindung funktionswesentlichen Teile dargestellt sind. Zu diesen Teilen gehört vor allem eine zu trocknende feuchte Wäsche enthaltende Wasch- oder Wäschetrommel WT und eine mit dieser verbundene, nachstehend näher betrachtete Prozessluftstromanordnung, durch die in Richtung der in Fig. 1 angegebenen Pfeile Prozessluft strömt.

Die Prozessluftstromanordnung umfasst eine Reihe von Prozessluftkanälen LU1, LU2, LU3 und LU4 sowie mit diesen verbundene Einrichtungen, nämlich ein Gebläse GB, eine Heizeinrichtung HE und einen Verdampfer EV einer hier nicht näher dargestellten Kondensatoreinrichtung. Der Verdampfer EV ist dabei austrittsseitig über einen als Übergangsteil dienenden trichterförmigen Anschluss TR1 mit dem einen Ende des Prozessluftkanals LU1 verbunden, welchem kalte, trockene Prozessluft zugeführt wird und welcher mit seinem anderen Ende mit einem Eingangsanschluss des Gebläses GB verbunden ist. Dieses Gebläse GB ist ausgangsseitig über den Prozessluftkanal LU2 mit der Eingangsseite der Heizeinrichtung HE verbunden, welche ausgangsseitig durch den Prozessluftkanal LU3 mit der Eingangsseite der Wasch- oder Wäschetrommel WT für die Zuführung von nunmehr heißer, trockener Prozessluft verbunden ist. Ausgangsseitig ist die Wasch- bzw. Wäschetrommel WT zur Ableitung von heißer feuchter Prozessluft, die von in ihr zu trocknender feuchter Wäsche abgeführt wird, durch den Prozessluftkanal LU4 und einen sich daran anschließenden, ebenfalls als Übergangsteil dienenden trichterförmigen Anschluss TR2 mit der Eintrittsseite des Verdampfers EV verbunden. In diesem Verdampfer EV findet ein Kondensieren der Feuchtigkeit der durch den Prozessluftkanal LU4 von der Wasch- bzw. Wäschetrommel WT zugeführten heißen, feuchten Prozessluft statt. Das dadurch in dem Verdampfer EV entstehende Kondensatwasser tritt, wie in Fig. 1 angedeutet, in Form von Wassertröpfchen in eine unterhalb des Verdampfers EV angeordnete Kondensatwasserwanne KW ein, in der es gesammelt wird.

Das in der Kondensatwasserwanne KW gesammelte Kondensatwasser muss nun aus dieser abgeführt werden, damit es nicht zu einem Überlaufen kommt. Dazu ist die Kondensatwasserwanne KW im vorliegenden Fall durch einen Verbindungskanal K1 mit der Eingangsseite einer elektrischen Pumpe P verbunden, die beispielsweise eine Flügelradpumpe sein kann. Ausgangsseitig ist die Pumpe P durch einen Verbindungskanal K2 mit der Eingangsseite eines Verteilers VE verbunden, bei dem es sich im vorliegenden Fall um ein steuerbares Zweiwegeventil handeln mag. Der betreffende Verteiler bzw. das Zweiwegeventil VE weist zwei Ausgangsanschlüsse auf, deren einer mit einem Verbindungskanal K3 verbunden ist und deren anderer mit einem Verbindungskanal K4 verbunden ist.

Der Verbindungskanal K3 dient dazu, dass durch ihn abgegebenes, aus der Kondensatwasserwanne KW mittels der Pumpe P hochgepumptes Kondensatwasser in einen im oberen Bereich des die Vorrichtung gemäß der Erfindung enthaltenden Wasch- oder Wäschetrockners vorgesehenen Sammelbehälter SA abgegeben wird. Bei diesem Sammelbehälter SA kann es sich beispielsweise um einen aus dem Wasch- oder Wäschetrockner, in welchem die beschriebene Vorrichtung enthalten ist, manuell entnehmbaren Sammelbehälter handeln, durch den das in ihn aus der Kondensatwasserwanne KW hochgepumpte Kondensatwasser entsorgt werden kann.

Der Verbindungskanal K4 dient dazu, ausgangsseitig ihm von dem Verteiler bzw. Zweiwegeventil VE zugeführtes Kondensatwasser an einen Spülbehälter SB abzugeben. Dieser Spülbehälter SB, der in dem die dargestellte Vorrichtung enthaltenden Wasch- oder Wäschetrockner möglichst weit an dessen Oberseite angeordnet ist und der die gleiche Speicherkapazität aufweisen kann wie die Kondensatwasserwanne KW oder der Sammelbehälter SA, beispielsweise für die Aufnahme von 2,5 Liter Kondensatwasser, ist sicherheitshalber - wie dargestellt - mit einer Überlaufanordnung versehen, durch die aus dem Spülbehälter SB gegebenenfalls überlaufendes Kondensatwasser in einen Überlaufbehälter UB gelangt, der durch einen Rücklaufkanal RK direkt mit der Kondensatwasserwanne KW in Verbindung steht und in ihn hinein gelangendes Kondensatwasser direkt an die Kondensatwasserwanne KW abzugeben vermag.

Der Spülbehälter SB ist mit seiner Ausgangs- bzw. Austrittsseite über ein normalerweise verschlossenes Verschlussteil VT, welches durch Betätigen bzw. Ansteuern zu öffnen ist, mit einem Fallrohr FR verbunden. Dieses einen relativ großen Querschnitt aufweisende Fallrohr FR weist vorzugsweise eine eine Fallhöhe von etwa 500mm bis 600mm für das aus dem Spülbehälter SB jeweils schwallartig abzugebende Kondensatwasser festlegende Länge auf. Es ist an seinem in Fig. 1 unteren Ende mit einer ortsfest angeordneten, einen über die gesamte Breite des Verdampfers EV sich erstreckenden, etwa ovalförmigen Austrittsbereich mit einer Breite von etwa 6mm bis 10mm aufweisenden Spüldüse DU versehen, die mit der Längsmitte ihres Austrittsbereiches in einem festgelegten Abstand, der hier etwa 10mm bis 50mm beträgt, von dem in Fig. 1 rechts liegenden Eintrittsbereich des Verdampfers EV für heiße, feuchte Prozessluft angeordnet ist. Durch diese Anordnung aus Fallrohr FR und Spüldüse DU kann aus dem Spülbehälter SB bei geöffnetem Verschlussteil VT austretendes Kondensatwasser als Wasserschwall an einen vorzugsweise lediglich in dem festgelegten Abstand von dem Eintrittsbereich der Prozessluft in den Verdampfer EV befindlichen Verdampferbereich abgegeben werden. Die Abmessungen der Durchlassöffnung des Verschlussteiles VT sowie des Querschnitts des Fallrohres FR und der Spüldüse DU sind dabei vorzugsweise so gewählt, dass das in dem Sammelbehälter SB gesammelte Kondensatwasser - also gemäß dem oben angenommenen Beispiel etwa 2,5 Liter Kondensatwasser - innerhalb einer sehr kurzen Zeitspanne von 1 bis 2 Sekunden als Wasserschwall an den Verdampfer EV abgegeben wird. Durch die Abgabe eines solchen Wasserschwalls, also mit einer Geschwindigkeit von zumindest 2,5 Litern in 2 Sekunden und vorzugsweise unmittelbar nach Durchführen eines Trocknungsvorgangs der feuchten Wäsche, die sich in der Wasch- bzw. Wäschetrommel WT zum Trocknen befindet, gelingt es auf besonders wirksame Weise, aus dem erwähnten Prozessluft-Eintrittsbereich des Verdampfers EV und über diesen Bereich hinaus Flusen und andere Verunreinigungen wegzuspülen, die dort durch den Prozessluftkanal LU4 und den trichterförmigen Anschluss TR2 zugeführt worden sind.

Um eine weitgehend gleichmäßige Abgabemenge des Wasserschwalls zwischen dem Beginn und der Beendigung seiner Abgabe zu erreichen, hat es sich als zweckmäßig erwiesen, wenn das Fallrohr FR einen Bereich aufweist, zu dem auch die Spüldüse DU gehört, der bezogen auf den Querschnitt des Austrittsbereiches des Spülbehälters SB verengt ist. Dabei ist jedoch sicherzustellen, dass die zuvor angegebene Mindestmenge am Kondensatwasser pro Zeiteinheit zum Spülen des Verdampfers EV bereitgestellt wird.

Zur Steuerung der in Fig. 1 dargestellten verschiedenen Einrichtungen, wie sie vorstehend erwähnt worden sind, ist eine Steuereinrichtung ST vorgesehen. Diese Steuereinrichtung ST kann beispielsweise einen Mikrocontroller mit eigener Software oder eine Mikroprozessorsteuerung mit einer CPU, einem ein Betriebsprogramm und ein Arbeitsprogramm enthaltenden ROM-Speicher und einem Arbeitsspeicher RAM sowie Schnittstellenschaltungen umfassen, denen eingangsseitig Betätigungssignale zugeführt werden und die ausgangsseitig Steuersignale an die verschiedenen Einrichtungen der in Fig. 1 dargestellten Vorrichtung abzugeben gestatten.

Die Steuereinrichtung ST weist gemäß Fig. 1 beispielsweise zwei Eingangsanschlüsse E1 und E2 auf, mit denen Schalter S1 bzw. S2 verbunden sind, die jeweils an einem Spannungsanschluss U liegen, der beispielsweise eine Spannung von +5V führen mag. Ausgangsseitig weist die Steuereinrichtung ST im vorliegenden Fall beispielsweise sechs Ausgangsanschlüsse A1, A2, A3, A4, A5 und A6 auf.

Der Ausgangsanschluss A1 der Steuereinrichtung ST ist mit einem Steuereingang des Gebläses GB verbunden, welches durch ihm an diesem Steuereingang zugeführte Steuersignale ein- oder ausgeschaltet werden kann.

Der Ausgangsanschluss A2 der Steuereinrichtung ST ist mit einem entsprechenden Steuereingang der Heizeinrichtung HE verbunden, die durch diesem Steuereingang zugeführte Steuersignale ein- oder ausgeschaltet werden kann.

Der Ausgangsanschluss A3 der Steuereinrichtung ST ist über eine lediglich als Wirkverbindung zu verstehende Verbindung mit der Wasch- bzw. Wäschetrommel WT verbunden, die über die betreffende Verbindung abgegebene Steuersignale in Drehung versetzbar oder stillsetzbar ist. Dies bedeutet, dass die betreffenden Steuersignale vom Ausgangsanschluss A3 der Steuereinrichtung ST an einen mit der Wasch- bzw. Wäschetrommel WT verbundenen Antriebsmotor abgegeben werden.

Der Ausgangsanschluss A4 der Steuereinrichtung ST ist mit einem Betätigungseingang des Verschlussteiles VT verbunden, welches durch ihm von dem Ausgangsanschluss A4 der Steuereinrichtung ST her zugeführte Steuersignale entweder geschlossen oder vollständig geöffnet ist. Es ist aber auch möglich, dass das Verschlussteil VT normalerweise geschlossen ist und lediglich durch ein vom Ausgangsanschluss A4 der Steuereinrichtung ST abgegebenes Steuersignal (z.B. entsprechend einem Binärsignal "1") vollständig zu öffnen ist.

Der Ausgangsanschluss A5 der Steuereinrichtung ST ist mit einem Steuer- bzw. Betätigungseingang des Verteilers bzw. Zweiwegeventils VE verbunden. Durch über diese Verbindung an das Verschlussteil bzw. Zweiwegeventil VE abgegebene Steuersignale kann das betreffende Verschlussteil bzw. Zweiwegeventil VE ihm mittels der Pumpe P aus der Kondensatwasserwanne KW zugeführtes Kondensatwasser entweder an den Verbindungskanal K3 oder an den Verbindungskanal K4 abgeben oder eine solche Abgabe an beide Verbindungskanäle K3 und K4 sperren.

Der Ausgangsanschluss A6 der Steuereinrichtung ST ist mit einem Steuereingang der erwähnten Pumpe P verbunden, die auf ihr durch diese Verbindung zugeführte Steuersignale entweder zu einem Pumpvorgang in Gang gesetzt oder stillgesetzt werden kann.

Im Hinblick auf die vorstehend betrachtete Steuereinrichtung ST mit ihren Eingangsanschlüssen E1 und E2 und Ausgangsanschlüssen A1 bis A6 sei noch angemerkt, dass durch Schließen des mit dem Eingangsanschluss E1 der Steuereinrichtung ST verbundenen Schalters S1 beispielsweise der normale Trocknungsbetrieb von in der Wasch- bzw. Wäschetrommel WT befindlicher feuchter Wäsche eingeleitet und durchgeführt wird und dass durch Schließen des mit dem Eingangsanschluss E2 der Steuereinrichtung ST verbundenen Schalters S2 die Abgabe von Kondensatwasser aus dem schlagartig geöffneten Spülbehälter SB als Wasserschwall an den Verdampfer EV gesteuert wird. Dabei kann die Betätigung der beiden Schalter S1 und S2 nur so vornehmbar sein, dass jeweils nur einer der beiden Schalter S1 und S2 betätigbar ist. Die betreffenden Schalter S1 und S2 können im übrigen jeweils durch einen Tastschalter gebildet sein.

Die Bereitstellung des Kondensatwassers in dem Spülbehälter SB aus der Kondensatwasserwanne KW kann beispielsweise programmgesteuert vorzugsweise während eines Trocknungsbetriebs oder aber nach dessen Abschluss automatisch oder gezielt durch manuellen Eingriff in die Programmsteuerung des die beschriebene Vorrichtung enthaltenden Wasch- oder Wäschetrockners erfolgen. Im Falle eines solchen manuellen Eingriffs in die Programmsteuerung könnte die Steuereinrichtung ST mit einem weiteren Eingang über einen weiteren Schalter (nicht dargestellt) mit dem Spannungsanschluss U verbunden sein. Durch die nach Beendigung eines Trocknungsvorgangs erfolgende schwallartige Abgabe des in dem Spülbehälter enthaltenen Kondensatwassers an den Verdampfer EV werden an dessen Lammellen LA haftende Flusen und sonstige Verunreinigungen durch die relativ hohe Strömungsgeschwindigkeit und die relativ große Kondensatwassermenge leicht weggespült. Dieser Spülvorgang kann mit dem betreffenden Kondensatwasser gegebenenfalls ein- oder mehrmals wiederholt durchgeführt werden. Dazu ist dann jeweils das wieder in der Kondensatwasserwanne KW gesammelte Kondensatwasser in den Spülbehälter SB hochzupumpen, aus dem es sodann erneut schwallartig an den Verdampfer abgegeben wird. Nach Abschluss des Reinigungs- bzw. Spülvorgangs ist das in der Kondensatwasserwanne KW gesammelte Kondensatwasser entweder in ein vorhandenes Abwassersystem abzuführen oder in den Sammelbehälter SA zu pumpen, der dann manuell zu entleeren ist.

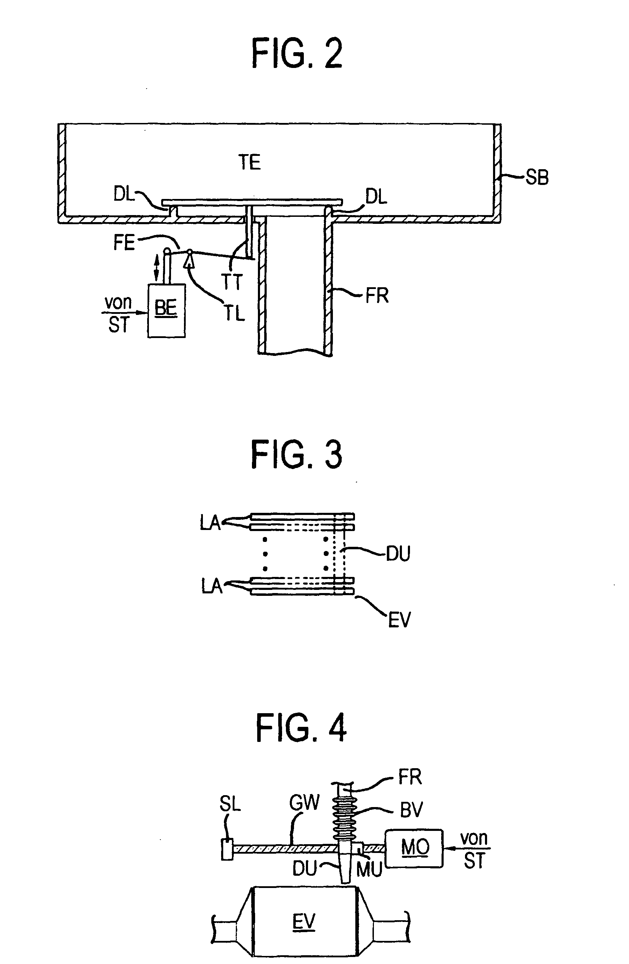

In Fig. 2 ist der in Fig. 1 schematisch angedeutete Spülbehälter SB in einer vergrößerten Schnittdarstellung näher mit seinem Verschlussteil veranschaulicht. Das in Fig. 1 lediglich schematisch dargestellte Verschlussteil VT ist gemäß Fig. 2 dadurch gebildet, dass der Spülbehälter SB im Bereich des mit ihm verbundenen Fallrohres FR Dichtungsbereiche bzw. Dichtungslippen DL aufweist, auf denen im geschlossenen Zustand des Verschlussteiles ein Verschlussteller TE mit seiner Unterseite dichtend aufliegt. Dieser Verschlussteller TE weist im mittleren Bereich auf seiner Unterseite ein Trägerteil TT auf, das durch ein Bodenteil des Spülbehälters SB abgedichtet hindurch verläuft und mit seinem unteren Ende an einem Endbereich eines relativ langen Schwenkteiles einer bistabilen Feder FE anliegt. Diese beispielsweise durch eine Blattfeder gebildete bistabile Feder FE, die vorzugsweise mit einer Sprungfunktion ausgestattet ist, wird an ihrer Lagerungsstelle von einem ortsfest angeordneten Tragteil TL getragen, um welches die betreffende bistabile Feder FE auf ihre Betätigung hin umzuschnappen vermag. Am Ende ihres relativ kurzen Schwenkbereiches von dem Tragteil TL aus ist die bistabile Feder FE mit einem Stößel einer Betätigungseinrichtung BE verbunden. Bei dieser Betätigungseinrichtung BE mag es sich vorzugsweise um eine thermisch oder elektromechanisch arbeitende Betätigungseinrichtung, wie um ein Thermorelais oder um ein Magnetrelais handeln, welches von der Steuereinrichtung ST (von deren Ausgangsanschluss A4 gemäß Fig. 1) ansteuerbar ist. Durch das Übersetzungsverhältnis zwischen den beiderseits des Tragteiles TL vorgesehenen Schwenkbereichen der bistabilen Feder FE vermag ein relativ kurzer Hub des Stößels der Betätigungseinrichtung BE einen demgegenüber wesentlich größeren Hub des Verschlusstellers TE (Hebelprinzip) auszulösen, und zwar vorzugsweise aufgrund der bistabilen Sprungfunktion der Feder FE, so dass das in dem Spülbehälter SB enthaltene Kondensatwasser als Wasserschwall durch das Fallrohr FR und die Spüldüse DU an den Verdampfer EV gemäß Fig. 1 abgegeben werden kann.

Fig. 3 zeigt in einer schematischen Darstellung eine Draufsicht auf den Verdampfer EV in der in Fig. 1 gezeigten Vorrichtung. Dabei ist aus Fig. 3 ersichtlich, dass der Verdampfer EV aus einer Reihe von parallel zueinander verlaufenden Lamellen LA besteht. Diese Lamellen LA sind durch Metallplatten gebildet, die in der erwähnten Kondensatoreinrichtung derart gekühlt sind, dass sich Feuchtigkeit der ihnen von der rechten Seite in Fig. 3 zugeführten feuchten Prozessluft an den kalten Oberflächen der Lamellen LA niederschlägt und, wie in Fig. 1 angedeutet, zur Abgabe von Kondensatwasser an die dort gezeigte Kondensatwasserwanne KW führt. In Fig. 3 ist die ortsfeste Lage der Spüldüse DU in Bezug auf den Verdampfer EV angedeutet.

Während bei dem in Fig. 1 und 3 dargestellten Verdampfer EV die Spüldüse DU jeweils ortsfest in Bezug auf den Verdampfer EV angeordnet ist, zeigt Fig. 4 eine Vorrichtung, bei der die Spüldüse DU gegenüber dem Verdampfer EV verschiebbar, genauer gesagt ablenkbar ist. Gemäß Fig. 4 ist oberhalb des Verdampfers EV der erwähnten Kondensatoreinrichtung eine Antriebsvorrichtung vorgesehen, die aus einem von der Steuereinrichtung ST steuerbaren Elektromotor MO, einer durch diesen drehbaren Gewindespindel GW sowie einem mit dieser gekoppelten Mutternteil MU besteht, welches im vorliegenden Fall mit der Spüldüse DU verbunden ist. Die Gewindespindel GW wird, wie in Fig. 4 angedeutet, an ihrem von dem Motor MO abliegenden Ende von einem Stützlager SL getragen.

Die Spüldüse DU ist gemäß Fig. 4 mit dem Fallrohr FR durch ein bewegliches Verbindungsteil BV verbunden, welches beispielsweise durch ein Faltenbalgteil oder einen Wellenschlauch gebildet sein kann. Durch diese Verschiebbarkeit der Spüldüse DU gegenüber dem Verdampfer EV kann die Spüldüse DU während der Abgabe eines Wasserschwalls von einem am Eintrittsbereich der Prozessluft in den Verdampfer EV der Kondensatoreinrichtung befindlichen Anfangsbereich bis zu einem in Abstand davon in Richtung zu dem Austrittsbereich der Prozessluft aus dem Verdampfer EV liegenden Endbereich abgelenkt werden. Dies heißt, dass die Lamellen LA des Verdampfers EV gemäß Fig. 3 über eine festgelegte Länge, beispielsweise über ihre gesamte Länge mittels des durch das Fallrohr FR und die Spüldüse DU schwallartig abgegebenen Kondensatwassers gespült werden können.

Abschließend sei angemerkt, dass die vorstehend erläuterte schwallartige Abgabe des durch das Fallrohr FR und die Spüldüse DU hindurchtretenden Kondensatwassers von einem am Eintrittsbereich der Prozessluft in den Verdampfer EV der Kondensatoreinrichtung befindlichen Anfangsbereich bis zu einem in Abstand davon in Richtung zu dem Austrittsbereich der Prozessluft aus dem Verdampfer EV liegenden Endbereich auch dadurch vorgenommen werden kann, dass das Fallrohr FR zusammen mit der Spüldüse DU entsprechend abgelenkt wird. Im übrigen kann die erwähnte Ablenkung auch in anderer Weise als in Fig. 4 veranschaulicht erfolgen, also generell durch eine mechanisch oder elektromechanisch betätigte Ablenkeinrichtung.

### Bezugszeichenliste

- A1, A2, A3 A4, A5, A6: Ausgangsanschlüsse
- BE: Betätigungseinrichtung
- BV: bewegliches Verbindungsteil
- DL: Dichtungsbereiche bzw. -lippen
- DU: Spüldüse
- E1, E2: Eingangsanschlüsse
- EV: Verdampfer
- FE: bistabile Feder
- FR: Fallrohr
- GB: Gebläse
- GW: Gewindespindel
- HE: Heizeinrichtung
- K1, K2, K3, K4: Verbindungskanäle
- KW: Kondensatwasserwanne
- LA: Lamellen
- LU1, LU2, LU3, LU4: Prozessluftkanäle
- MO: Motor
- MU: Mutternteil
- P: Pumpe
- RK: Rücklaufkanal
- S1, S2: Schalter
- SA: Sammelbehälter
- SB: Spülbehälter
- SL: Stützlager
- ST: Steuereinrichtung
- TE: Verschlussteller
- TL: Federtragteil
- TR1, TR2: trichterförmige Anschlüsse (Übergangsteile)
- TT: Trägerteil
- U: Spannungsanschluss
- UB: Überlaufbehälter
- VE: Verteiler bzw. Zweiwegeventil
- VT: Verschlussteil
- WT: Wasch- oder Wäschetrommel

## Patentansprüche

1. Verfahren zum Reinigen eines innerhalb eines Prozessluftkreislaufes eines Wach-oder Wäschetrockners angeordneten Bauteiles, insbesondere eines Verdampfers (EV) einer Kondensatoreinrichtung, mittels Kondensatwasser, welches in dem Prozessluftkreislauf aus dem Trocknen von feuchter Wäsche gewonnen und in einer Kondensatwasserwanne (KW) aufgefangen wird, aus der es zu einem oberhalb des Verdampfers (EV) vorgesehenen Spülbe-hälter (SB) geleitet und von dessen Austrittsseite an den betreffenden Verdampfer (EV) abgegeben wird, **dadurch gekennzeichnet, dass** das Kondensatwasser aus dem Spülbehälter (SB) durch dessen schlagartiges Öffnen auf der Austrittsseite als Wasserschwall an das betreffende Bauteil (EV) abgegeben wird.

2. Verfahren nach Anspruch 1, **dadurch gekennzeichnet, dass** der an das Bauteil (EV) abzugebende Wasserschwall in seiner Abgabemenge zwischen dem Beginn und der Beendigung der Abgabe weitgehend vergleichmäßigt wird.

3. Verfahren nach Anspruch 1 oder 2, **dadurch gekennzeichnet, dass** bei einem das genannte Bauteil (EV) bildenden Verdampfer (EV) einer Kondensatoreinrichtung der Wasserschwall an einen vorzugsweise lediglich in einem festgelegten Abstand vom Eintrittsbereich der Prozessluft in den Verdampfer (EV) befindlichen Verdampferbereich abgegeben wird.

4. Verfahren nach Anspruch 1 oder 2, **dadurch gekennzeichnet, dass** bei einem das genannte Bauteil (EV) bildenden Verdampfer (EV) einer Kondensatoreinrichtung die Abgabe des Wasserschwalls unter dessen mechanischer oder elektromechanischer Ablenkung von einem in einem festgelegten Abstand vom Eintrittsbereich der Prozessluft in den Verdampfer (EV) vorgesehenen Anfangsbereich bis zu einem in Abstand davon in Richtung zu dem Austrittsbereich der Prozessluft aus dem Verdampfer (EV) liegenden Endbereich vorgenommen wird.

5. Verfahren nach einem der Ansprüche 1 bis 4, **dadurch gekennzeichnet, dass** das Kondensatwasser mittels einer Pumpe (P) aus der Kondensatwasserwanne (KW) in den Spülbehälter (SB) gepumpt wird.

6. Verfahren nach einem der Ansprüche 1 bis 5, **dadurch gekennzeichnet, dass** das schlagartige Öffnen des Spülbehälters (SB) auf dessen Austrittsseite durch Betätigen eines bistabilen Spülbehälterverschlusses (VT; BE, FE, TT, TE, DL) gesteuert wird.

7. Verfahren nach Anspruch 6, **dadurch gekennzeichnet, dass** die Betätigung des Spülbehälterverschlusses (VT; BE, FE, TT, TE, DL) thermisch oder elektromagnetisch bewirkt wird.

8. Vorrichtung zur Durchführung des Verfahrens nach einem der Ansprüche 1 bis 7, mit einem innerhalb eines Prozessluftkreislaufes eines Wasch- oder Wäschetrockners angeordneten zu reinigenden Bauteil, insbesondere einem Verdampfer (EV) einer Kondensatoreinrichtung und mit einer Kondensatwasserwanne, in welche in dem Prozessluftkreislauf durch Trocknen von feuchter Wäsche entstehendes Kondensatwasser auffangbar, aus dieser zu einem oberhalb des Verdampfers vorgesehenen Spüibehälter (SB) hinleitbar und aus diesem an das betreffende Bauteil abgebbar ist, **dadurch gekennzeichnet, dass** der Spülbehälter (SB) auf seiner Austrittsseite ein Verschlussteil (VT) aufweist, durch dessen schlagartiges Öffnen der Spülbehälter (SB) das in ihm enthaltene Kondensatwasser schwallartig durch ein Fallrohr (FR) an das genannte Bauteil (EV) abzugeben gestattet.

9. Vorrichtung nach Anspruch 8, **dadurch gekennzeichnet, dass** das Fallrohr (FR) einen Bereich (DU) aufweist, der bezogen auf den Querschnitt des Austrittsbereiches des Spülbehälters (SB) verengt ist.

10. Vorrichtung nach Anspruch 8 oder 9, **dadurch gekennzeichnet, dass** bei einem das genannte Bauteil (EV) bildenden Verdampfer (EV) einer Kondensatoreinrichtung der Wasserschwall an einen vorzugsweise lediglich am Eintrittsbereich der Prozessluft in den Verdampfer (EV) befindlichen Verdampferbereich mittels einer mit dem Fallrohr (FR) verbundenen, ortsfest angeordneten Spüldüse (DU) abgebbar ist.

11. Vorrichtung nach Anspruch 10, **dadurch gekennzeichnet, dass** die Spüldüse (DU) und/oder das Fallrohr während der Abgabe des Wasserschwalls durch eine mechanisch oder elektromechanisch betätigte Ablenkeinrichtung (MO, MU, GE) von einem am Eintrittsbereich der Prozessluft in den Verdampfer (EV) der Kondensatoreinrichtung befindlichen Anfangsbereich bis zu einem in Abstand davon in Richtung zu dem Austrittsbereich der Prozessluft aus dem Verdampfer liegenden Endbereich ablenkbar ist.

12. Vorrichtung nach einem der Ansprüche 8 bis 11, **dadurch gekennzeichnet, dass** der Spülbehälter (SB) mit der Kondensatwasserwanne (KW) mittels einer Pumpe (P) verbunden ist.

13. Reinigungsvorrichtung nach einem der Ansprüche 8 bis 12, **dadurch gekennzeichnet, dass** das Verschlussteil (VT) des Spülbehälters (SB) mit einer bistabilen Federanordnung (FE) verbunden ist, die zum Öffnen des durch das Verschlussteil (VT) verschlossenen Austrittsbereichs des Spülbehälters (SB) betätigbar ist.

14. Vorrichtung nach Anspruch 13, **dadurch gekennzeichnet, dass** für die Betätigung der bistabilen Federanordnung (FE) ein mit dieser gekoppeltes Thermo- oder Magnetrelais vorgesehen ist.

15. Wasch- oder Wäschetrockner mit einer Vorrichtung nach einem der Ansprüche 8 bis 14.

## Claims

1. Method of cleaning a component arranged within a process air circuit of a washer-drier or laundry drier, particularly an evaporator (EV) of a condenser device, by means of condensation water, which is obtained in the process air circuit from the drying of moist laundry and is collected in a condensation water trough (KW), from which it is conducted to a rinsing container (SB), which is provided above the evaporator (EV) and delivered from the outlet side thereof to the evaporator (EV) concerned, **characterised in that** the condensation water is delivered as a water surge to the component (EV) concerned from the rinsing container (SB) through abrupt opening thereof on the outlet side.

2. Method according to claim 1, **characterised in that** the water surge to be delivered to the component (EV) is substantially uniform in its delivery quantity between the beginning and the end of the delivery.

3. Method according to claim 1 or 2, **characterised in that** in the case of an evaporator (EV), which forms the said component (EV), of a condenser device the water surge is delivered to an evaporator region preferably disposed merely at a fixed spacing from the entry region of the process air into the evaporator (EV).

4. Method according to claim 1 or 2, **characterised in that** in the case of an evaporator (EV), which forms the said component (EV), of a condenser device the delivery of the water surge is undertaken with mechanical or electromechanical deflection thereof from a collecting region, which is provided at a fixed spacing from the entry region of the process air into the evaporator (EV), to an end region disposed at a spacing therefrom in direction towards the exit region of the process air from the evaporator (EV).

5. Method according to any one of claims 1 to 4, **characterised in that** the condensation water is pumped by means of pump (P) out of the condensation water trough (KW) into the rinsing container (SB).

6. Method according to any one of claims 1 to 5, **characterised in that** the abrupt opening of the rinsing container (SB) on the outlet side thereof is controlled by actuation of a bistable rinsing container closure (VT; BE, FE, TT, TE, DL).

7. Method according to claim 6, **characterised in that** the actuation of the rinsing container closure (VT: BE, FE, TT, TE, DL) is effected thermally or electromagnetically.

8. Device for performing the method according to any one of the claims 1 to 7, with a component which is arranged within a process air circuit of a washer-drier or a laundry drier and which is to be cleaned, particularly an evaporator (EV) of a condenser device, and with a condensation water trough, in which condensation water arising in the process air circuit through drying of moist laundry can be collected, conducted from this to a rinsing container (SB) provided above the evaporator and delivered from this to the component concerned, **characterised in that** the rinsing container (SB) has on its outlet side a closure part (VT) by the abrupt opening of which the rinsing container (SB) permits delivery of the condensation water contained therein in the manner of a surge through a drop pipe (FR) to the said component (EV).

9. Device according to claim 8, **characterised in that** the drop pipe (FR) has a region (DU) which is narrowed with respect to the cross-section of the outlet region of the rinsing container (SB).

10. Device according to claim 8 or 9, **characterised in that** in the case of an evaporator (EV), which forms the said component (EV), of a condenser device the water surge can be delivered to an evaporator region, which is preferably disposed merely at the entry region of the process air into the evaporator (EV), by means of a fixedly arranged rinsing nozzle (DU) connected with the drop pipe (FR).

11. Device according to claim 10, **characterised in that** the rinsing nozzle (DU) and/or the drop pipe during delivery of the water surge is or are deflectable by a mechanically or electromechanically actuated deflecting device (MO, MU, GE) from a starting region, which is disposed at an entry region of the process air into the evaporator (EV) of the condenser device, to an end region lying at a spacing therefrom in direction towards the exit region of the process air from the evaporator.

12. Device according to any one of claims 8 to 11, **characterised in that** the rinsing container (SB) is connected with the condensation water trough (KW) by means of a pump (P).

13. Cleaning device according to any one of claims 8 to 12, **characterised in that** the closure part (VT) of the rinsing container (SB) is connected with a bistable spring arrangement (FE) which is actuable for opening the outlet region, which is closed by the closure part (VT), of the rinsing container (SB).

14. Device according to claim 13, **characterised in that** provided for actuation of the bistable spring arrangement (FE) is a thermorelay or magnet relay coupled therewith.

15. Washer-drier or laundry drier with a device according to any one of the claims 8 to 14.

## Revendications

1. Procédé pour nettoyer un composant situé dans un circuit d'air de processus d'un combiné lavage séchage ou d'un sèche-linge, en particulier un évaporateur (EV) d'un dispositif condenseur, au moyen d'eau de condensat qui est obtenue dans le circuit d'air de processus à partir du séchage de linge humide et est recueillie dans une cuve d'eau de condensat (KW) d'où elle est dirigée vers un récipient de rinçage (SB) prévu au-dessus de l'évaporateur (EV) et du côté sortie duquel elle est délivrée audit évaporateur (EV), **caractérisé en ce que** l'eau de condensat est délivrée audit composant (EV) sous la forme d'un jet d'eau à partir du récipient de rinçage (SB) par ouverture brusque de celui-ci sur le côté sortie.

2. Procédé selon la revendication 1, **caractérisé en ce que** le jet d'eau à délivrer au composant (EV) subit une large égalisation de la quantité délivrée entre le début et la fin de la délivrance.

3. Procédé selon la revendication 1 ou 2, **caractérisé en ce que**, dans le cas d'un évaporateur (EV) d'un dispositif condenseur constituant ledit composant (EV), le jet d'eau est délivré à une zone de l'évaporateur qui se trouve de préférence seulement à une distance déterminée de la zone d'entrée de l'air de processus dans l'évaporateur (EV).

4. Procédé selon la revendication 1 ou 2, **caractérisé en ce que**, dans le cas d'un évaporateur (EV) d'un dispositif condenseur constituant ledit composant (EV), la délivrance du jet d'eau est effectuée avec déviation mécanique ou électromécanique de celui-ci d'une zone de départ, prévue à une distance déterminée de la zone d'entrée de l'air de processus dans l'évaporateur (EV), jusqu'à une zone terminale située à distance de celle-ci en direction de la zone de sortie de l'air de processus hors de l'évaporateur (EV).

5. Procédé selon l'une des revendications 1 à 4, **caractérisé en ce que** l'eau de condensat est pompée, au moyen d'une pompe (P), de la cuve d'eau de condensat (KW) vers le récipient de rinçage (SB).

6. Procédé selon l'une des revendications 1 à 5, **caractérisé en ce que** l'ouverture brusque du récipient de rinçage (SB) sur le côté sortie de celui-ci est commandée par actionnement d'une fermeture bistable du récipient de rinçage (VT ; BE, FE, TT, TE, DL).

7. Procédé selon la revendication 6, **caractérisé en ce que** l'actionnement de la fermeture du récipient de rinçage (VT; BE, FE, TT, TE, DL) est provoquée thermiquement ou électromagnétiquement.

8. Dispositif pour exécuter le procédé selon l'une des revendications 1 à 7, avec un composant à nettoyer situé dans un circuit d'air de processus d'un combiné lavage séchage ou d'un sèche-linge, en particulier un évaporateur (EV) d'un dispositif condenseur, et avec une cuve d'eau de condensat dans laquelle peut être recueillie l'eau de condensat qui se forme dans le circuit d'air de processus par séchage de linge humide et à partir de laquelle cette eau peut être dirigée vers un récipient de rinçage (SB) prévu au-dessus de l'évaporateur (EV) et à partir duquel elle peut être délivrée audit composant, **caractérisé en ce que** le récipient de rinçage (SB), sur son côté sortie, comporte une pièce de fermeture (VT) du fait de l'ouverture brusque de laquelle le récipient de rinçage (SB) permet la délivrance audit composant (EV), sous forme de jet et par un tuyau de descente (FR), de l'eau de condensat qu'il contient.

9. Dispositif selon la revendication 8, **caractérisé en ce que** le tuyau de descente (FR) comporte une zone (DU) qui est rétrécie par rapport à la section de la zone de sortie du récipient de rinçage (SB).

10. Dispositif selon la revendication 8 ou 9, **caractérisé en ce que**, dans le cas d'un évaporateur (EV) d'un dispositif condenseur constituant ledit composant (EV), le jet d'eau peut être délivré, au moyen d'une buse de rinçage (DU) stationnaire reliée au tuyau de descente (FR), à une zone de l'évaporateur située de préférence seulement au niveau de la zone d'entrée de l'air de processus dans l'évaporateur (EV).

11. Dispositif selon la revendication 10, **caractérisé en ce que** la buse de rinçage (DU) et/ou le tuyau de descente peuvent, pendant la délivrance du jet d'eau, être déviés, par un dispositif de déviation (MO, MU, GE) actionné mécaniquement ou électromécaniquement, d'une zone de départ, située au niveau de la zone d'entrée de l'air de processus dans l'évaporateur (EV) du dispositif condenseur, jusqu'à une zone terminale située à distance de celle-ci en direction de la zone de sortie de l'air de processus hors de l'évaporateur.

12. Dispositif selon l'une des revendications 8 à 11, **caractérisé en ce que** le récipient de rinçage (SB) est relié à la cuve d'eau de condensat (KW) au moyen d'une pompe (P).

13. Dispositif de nettoyage selon l'une des revendications 8 à 12, **caractérisé en ce que** la pièce de fermeture (VT) du récipient de rinçage (SB) est reliée à un dispositif élastique bistable (FE) qui peut être actionné pour ouvrir la zone de sortie du récipient de rinçage (SB) fermée par la pièce de fermeture (VT).

14. Dispositif selon la revendication 13, **caractérisé en ce qu'**est prévu, pour l'actionnement du dispositif élastique bistable (FE), un thermorelais ou relais magnétique couplé audit dispositif élastique.

15. Combiné lavage séchage ou sèche-linge comportant un dispositif selon l'une des revendications 8 à 14.
